# EUROPEAN PATENT APPLICATION

(11) **EP 2 159 670 A2**
(43) Date of publication of application: **03.03.2010**
(21) Application number: 08022306.8
(22) Date of filing: 22.12.2008
(51) Int. Cl.: G06F 3/041

(54) **Method capable of preventing mistakenly triggering a touch panel**

(30) Priority: 01.09.2008 TW 97133441
(71) Applicant: eTurboTouch Technology Inc., JhongLi City, Taoyuan County (TW)
(72) Inventor: Wu, Ming-Tsung, Jhongli City Taoyuan County (TW); Wu, Cheng-Ko, Jhongli City Taoyuan County (TW)
(74) Representative: Schaeberle, Steffen

(57) **Abstract**

To perform palm rejection, scan a plurality of areas (28, 30, 32, 34, 36, 38, 40) on a touch panel (10, 52, 58) to detect a plurality of triggered areas (32, 34, 36, 38) within the plurality of areas (28, 30, 32, 34, 36, 38, 40). Then detect which of the triggered areas (32, 34, 36, 38) are next to one another to determine a plurality of blocks (24, 26). If the plurality of blocks (24, 26) contain a block with an overlarge area, then eliminate the block with the overlarge area, and generate a current coordinate according to a block with a smaller area which may be triggered by a finger or stylus.

## Description

The present invention relates to a palm rejection method.

There are many prior art multi-point touch techniques for triggering a touch panel. One of the common techniques is matrix multi-point touch such as projected capacitive touch. A projected capacitive touch panel can be triggered by a finger, a stylus, or a conductor held by a hand, etc. When writing on a medium or large touch panel, a portion of a palm is often rested on the touch panel. Thus a technique called palm rejection is developed when writing on a resistive multi-point touch panel. Since palm rejection is not available in a projected capacitive touch panel, when a device is held to write on a medium or large projected capacitive touch panel, the palm cannot rest on the touch panel, making it difficult to write on the touch panel.

In the prior art, when an input device is held to write on a matrix multi-point touch panel, if the palm touches the matrix multi-point touch panel, the software of the matrix multi-point touch panel will regard the touched area as receiving a plurality of inputs. Then when a finger or stylus enters a formal input, the matrix multi-point touch panel becomes unable to identify the input of the finger or stylus thereby generating an error signal. Thus palm rejection is developed to ignore triggering of a palm in the resistive multi-point touch panel.

This in mind, the present invention aims at providing a method for implementing palm rejection which detects which of the triggered areas are next to one another so as to determine a plurality of blocks. Then the block with an overlarge dimension is removed so as generate the current coordinate according to the position of the remaining block. Thus palm rejection can be implemented without reducing the sensitivity of the touch panel.

This is achieved by a method for implementing palm rejection according to claim 1. The dependent claims pertain to corresponding further developments and improvements.

As will be seen more clearly from the detailed description following below, the claimed method for implementing palm rejection comprises scanning a plurality of areas of a touch panel sequentially to detect triggered areas of the touch panel, detecting which of the triggered areas are next to one another to determine a plurality of blocks, removing a block of the plurality of blocks not conforming to a predetermined range, and generating a current coordinate according to a block of the plurality of blocks conforming to the predetermined range.

In the following, the invention is further illustrated by way of example, taking reference to the accompanying drawings. Thereof
FIGS.1 and 2 show a prior art resistive multi-point touch panel,
FIG.3 is a flowchart of an embodiment for implementing palm rejection according to the present invention,
FIG.4 shows the touch panel in FIG.1 triggered by a finger and a palm,
FIG.5 is a perspective view of a projected capacitive touch panel, and
FIGS.6 and 7 show another projected capacitive touch panel.

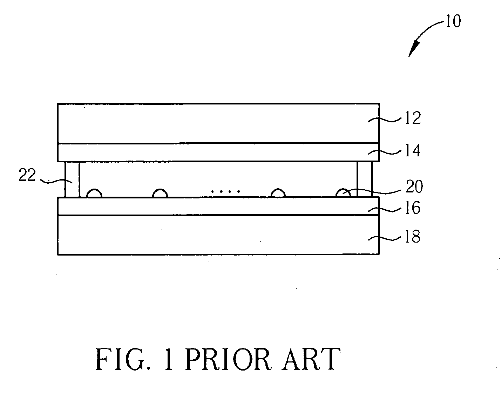

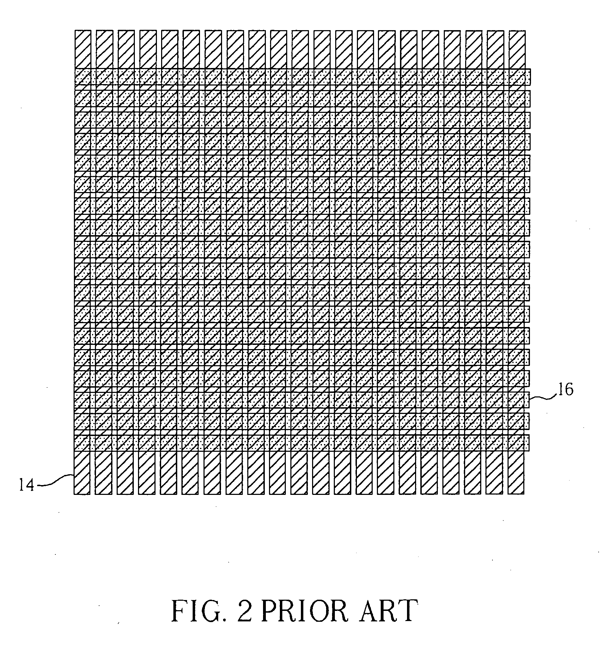

Please refer to FIGS.1 and 2. FIGS.1 and 2 show a prior art resistive multi-point touch panel 10. The resistive multi-point touch panel 10 comprises a PET layer 12, a first ITO layer 14, a second ITO layer 16, a glass layer 18, a plurality of dot spacers 20 and a plurality of resins 22 for isolating the first ITO layer 14 and the second ITO layer 16, and providing space for the dot spacers 20 between the first ITO layer 14 and the second ITO layer 16.

The resistive multi-point touch panel 10 is operated by conducting the first ITO layer 14 and the second ITO layer 16 to trigger the touch panel 10. Since the dot spacers 20 are insulators, if the dot spacers 20 are spaced far apart from each other, then the finger or stylus can easily trigger the touch panel 10 making the touch panel 10 oversensitive. To avoid false triggers by the palm, the prior art shortens the space between dot spacers 20. However this makes the finger or stylus difficult to trigger the touch panel 10 and reduces the sensitivity of the touch panel 10.

The matrix multi-point touch panel of the embodiment of the present invention has a palm rejection function. When multiple points are triggered by an overlarge conductor such as the palm of a user, no response will be generated to avoid an erroneous response of the touch panel.

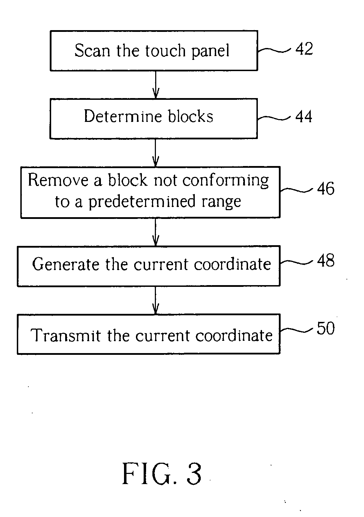

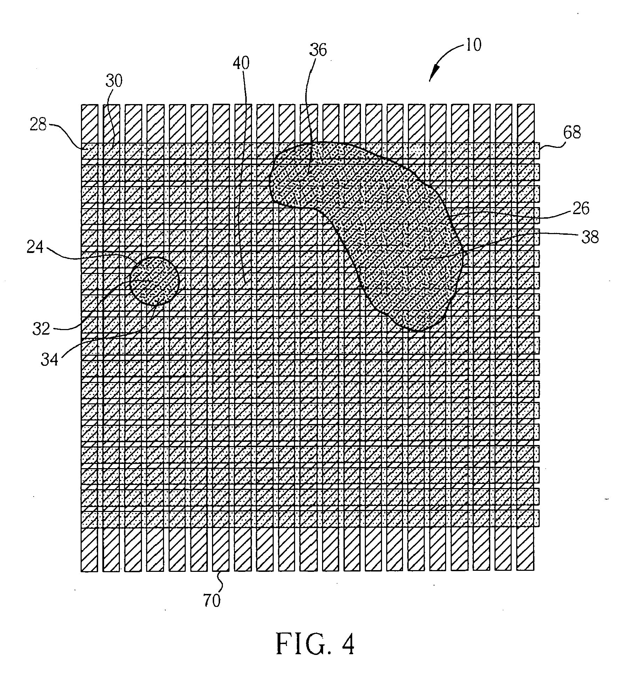

Please refer to FIGS.3 and 4. FIG.3 is a flowchart of an embodiment for implementing palm rejection according to the present invention. FIG.4 shows the touch panel 10 triggered by a finger and a palm. The block triggered by the finger is the first block 24. The block triggered by the palm is the second block 26. The palm rejection method comprises the following steps:
- Step 42:: scan all areas 28, 30, 32, 34, 36, 38, 40 of the touch panel 10 one by one to detect the triggered areas 32, 34, 36, 38 of the touch panel 10;
- Step 44:: detect which of the triggered areas 32, 34, 36, 38 are next to one another to determine the plurality of blocks 24, 26;
- Step 46:: remove the block 26 which does not conform to a predetermined range;
- Step 48:: generate a current coordinate according to the block 24 which conforms to the predetermined range;
- Step 50:: transmit the current coordinate to the processor.

In Step 42, each area is an intersecting point of an X-directional electrode 68 and Y-directional electrode 70 or is formed by a plurality of intersecting points of X-directional electrodes 68 and Y-directional electrodes 70. If each area is formed by a plurality of intersecting points of X-directional electrodes 68 and Y-directional electrodes 70, the number of intersecting points can be a small number so that Step 44 can correctly detect which of the triggered areas 32, 34, 36, 38 are next to each other. In Step 44, since areas within the first block 24 such as areas 32 and 34 are triggered, areas within the second block 26 such as areas 36 and 38 are triggered, and areas between the first block 24 and the second block 26 such as area 40 are not triggered, it can be determined that areas within the first block 24 such as areas 32 and 34 belong to the same block, areas within the second block 26 such as areas 36 and 38 belong to the same block, and the first and second blocks 24, 26 are separated from each other and belong to different blocks.

After it is determined that areas within the first block 24 such as areas 32 and 34 belong to the same block, and areas within the second block 26 such as areas 36 and 38 belong to the same block, Step 44 can determine if the first and second blocks 24, 26 are triggered by the finger or the palm according to their dimensions. If the dimensions of the first and second blocks 24, 26 are overlarge, then they are triggered by the palm. If the dimensions of the first and second blocks 24, 26 are within the predetermined range, then they are triggered by the finger.

For instance, in the first embodiment, it can be determined that if the length of a block in either X or Y direction exceeds 5 intersecting points of X-directional electrodes 68 and Y-directional electrodes 70, then the block will be removed because it is triggered by the palm. Contrarily, if the length of a block in neither X nor Y direction exceeds 5 intersecting points of X-directional electrodes 68 and Y-directional electrodes 70, then the block will be treated as triggered by the finger. Since the length of the second block 26 in X direction exceeds 5 intersecting points of X-directional electrodes 68 and Y-directional electrodes 70, Step 46 will remove the second block 26 regardless whether the length of the second block 26 in Y direction exceeds 5 intersecting points of X-directional electrodes 68 and Y-directional electrodes 70 or not. Since the length of the first block 24 in neither X nor Y direction exceeds 5 intersecting points of X-directional electrodes 68 and Y-directional electrodes 70, and the first block 24 is the only block conforming to the predetermined range, Step 48 will generate the current coordinate according to the position of the first block 24.

In the second embodiment, it can be determined that if the length of a block in X direction is not shorter than 5 intersecting points of X-directional electrodes 68 and Y-directional electrodes 70, or if the length of the block in Y direction exceeds 5 intersecting points of X-directional electrodes 68 and Y-directional electrodes 70, then the block will be removed because it is triggered by the palm. Contrarily, if the length of a block in X direction is shorter than 5 intersecting points of X-directional electrodes 68 and Y-directional electrodes 70, and the length of the block in Y direction does not exceed 5 intersecting points of X-directional electrodes 68 and Y-directional electrodes 70, then the block will be treated as triggered by the finger. Since the length of the second block 26 in X direction is not shorter than 5 intersecting points of X-directional electrodes 68 and Y-directional electrodes 70, Step 46 will remove the second block 26 regardless whether the length of the second block 26 in Y direction exceeds 5 intersecting points of X-directional electrodes 68 and Y-directional electrodes 70 or not. Since the length of the first block 24 in X direction is shorter than 5 intersecting points of X-directional electrodes 68 and Y-directional electrodes 70, the length of the first block 24 in Y direction does not exceed 5 intersecting points of X-directional electrodes 68 and Y-directional electrodes 70, and the first block 24 is the only block conforming to the predetermined range, Step 48 will generate the current coordinate according to the position of the first block 24.

In the third embodiment, still exampled by FIG.4, however the second block 26 is no longer treated as triggered by the palm. In this embodiment, it can be determined that if the length of a block in either X or Y direction is not shorter than 11 intersecting points of X-directional electrodes 68 and Y-directional electrodes 70, then the block will be removed because it is triggered by the palm. Contrarily, if the lengths of a block in X and Y directions are both shorter than 11 intersecting points of X-directional electrodes 68 and Y-directional electrodes 70, then the block will be treated as triggered by the finger. Since the lengths of each of the first and second blocks 24, 26 in X and Y directions are both shorter than 11 intersecting points of X-directional electrodes 68 and Y-directional electrodes 70, Step 46 will conclude both blocks 24, 26 conforming to the predetermined range. Then Step 48 will check which of the coordinates corresponding to the blocks 24, 26 is closer to the previous coordinate. If the coordinate corresponding to the first block 24 is closer to the previous coordinate, then generate the current coordinate according to the position of the first block 24. If the coordinate corresponding to the second block 26 is closer to the previous coordinate, then generate the current coordinate according to the position of the second block 26.

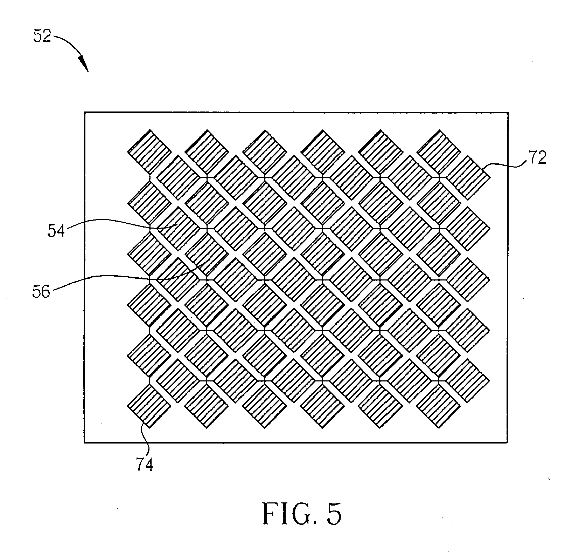

The above embodiments are exampled by a resistive multi-point touch panel 10, but the present invention can be used in any kind of matrix multi-point touch panel. For instance, please refer to FIG.5. FIG.5 is a perspective view of a projected capacitive touch panel 52. The projected capacitive touch panel 52 comprises a plurality of X-directional electrodes 72 and a plurality of Y-directional electrodes 74. Each X-directional electrode 72 has a plurality of cascaded ITOs 54. Each Y-directional electrode 74 also has a plurality of cascaded ITOs 56. Between an ITO 54 and ITO 56 exists capacitance. The capacitance is varied when the projected capacitive touch panel 52 is triggered by a finger, stylus or palm. Thus the method of FIG.3 can be executed to detect the triggered areas of the projected capacitive touch panel 52. And the block with an overlarge dimension will be removed to generate the current coordinate.

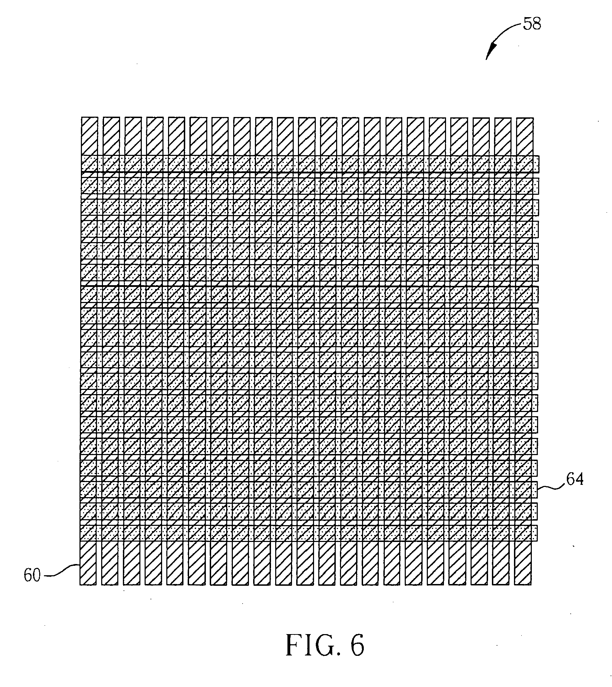

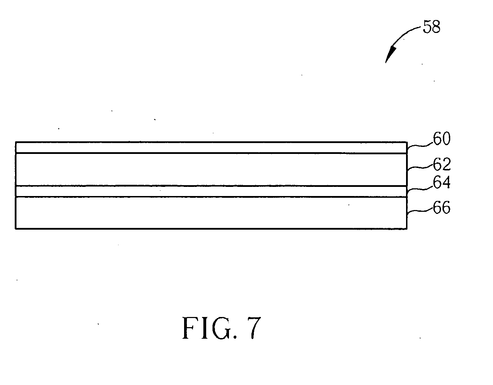

FIGS.6 and 7 show another projected capacitive touch panel 58. The projected capacitive touch panel 58 comprises a first conducting electrode 60, a first insulating layer 62, a second conducting electrode 64 and a second insulating layer 66. Between the first conducting electrode 60 and second conducting electrode 64 exists capacitance. The capacitance is varied when the projected capacitive touch panel 58 is triggered by a finger, stylus or palm. Thus the method of FIG.3 can be executed to detect the triggered areas of the projected capacitive touch panel 58. And the block with an overlarge dimension will be removed to generate the current coordinate.

Compared to the prior art, the embodiments of the present invention detect which of the triggered areas are next to one another so as to determine the plurality of blocks. Then the block with an overlarge dimension is removed so as generate the current coordinate according to the position of the remaining block. Thus palm rejection can be implemented without reducing the sensitivity of the touch panel.

## Claims

1. A method for implementing palm rejection comprising:
scanning a plurality of areas (28, 30, 32, 34, 36, 38, 40) of a touch panel (10, 52, 58) sequentially to detect triggered areas (32, 34, 36, 38) of the touch panel (10, 52, 58);
detecting which of the triggered areas (32, 34, 36, 38) are next to one another to determine a plurality of blocks (24, 26);
removing a block of the plurality of blocks (24, 26) not conforming to a predetermined range; and
generating a current coordinate according to a block (24) of the plurality of blocks (24, 26) conforming to the predetermined range.

2. The method of claim 1 further comprising transmitting the current coordinate to a processor.

3. The method of claim 1 wherein generating the current coordinate according to the block of the plurality of blocks (24, 26) conforming to the predetermined range comprises if at least two blocks (24, 26) conform to the predetermined range, generating the current coordinate according to a block of the at least two blocks (24, 26) closest to a previous coordinate.

4. The method of claim 1 wherein the predetermined range has a first predetermined length and a second predetermined length.

5. The method of claim 4 wherein removing the block (26) of the plurality of blocks (24, 26) not conforming to the predetermined range is removing a block of the plurality of blocks (24, 26) having a length in a first axis exceeding the first predetermined length or a length in a second axis exceeding the second predetermined length, and generating the current coordinate according to the block of the plurality of blocks (24, 26) conforming to the predetermined range is generating the current coordinate according to a block of the plurality of blocks (24, 26) having a length in the first axis not exceeding the first predetermined length and a length in the second axis not exceeding the second predetermined length.

6. The method of claim 4 wherein removing the block of the plurality of blocks (24, 26) not conforming to the predetermined range is removing a block of the plurality of blocks (24, 26) having a length in a first axis not shorter than the first predetermined length or a length in a second axis exceeding the second predetermined length, and generating the current coordinate according to the block of the plurality of blocks (24, 26) conforming to the predetermined range is generating the current coordinate according to a block of the plurality of blocks (24, 26) having a length in the first axis shorter than the first predetermined length and a length in the second axis not exceeding the second predetermined length.

7. The method of claim 4 wherein removing the block of the plurality of blocks (24, 26) not conforming to the predetermined range is removing a block of the plurality of blocks (24, 26) having a length in a first axis not shorter than the first predetermined length or a length in a second axis not shorter than the second predetermined length, and generating the current coordinate according to the block of the plurality of blocks (24, 26) conforming to the predetermined range is generating the current coordinate according to a block of the plurality of blocks (24, 26) having a length in the first axis shorter than the first predetermined length and a length in the second axis shorter than the second predetermined length.

8. The method of claim 1 wherein scanning the plurality of areas (28, 30, 32, 34, 36, 38, 40) of the touch panel (10, 52, 58) sequentially to detect the triggered areas (32, 34, 36, 38) of the touch panel (10, 52, 58) is scanning a plurality of areas (28, 30, 32, 34, 36, 38, 40) of a matrix multi-point touch panel (10, 52, 58) sequentially to detect triggered areas (32, 34, 36, 38) of the matrix multi-point touch panel (10, 52, 58).

9. The method of claim 8 wherein scanning the plurality of areas (28, 30, 32, 34, 36, 38, 40) of the touch panel (10, 52, 58) sequentially to detect the triggered areas (32, 34, 36, 38) of the touch panel (10, 52, 58) is scanning a plurality of areas of a projected capacitive touch panel (52, 58) sequentially to detect triggered areas of the projected capacitive touch panel (52, 58).

10. The method of claim 8 wherein scanning the plurality of areas (28, 30, 32, 34, 36, 38, 40) of the touch panel (10, 52, 58) sequentially to detect the triggered areas (32, 34, 36, 38) of the touch panel (10, 52, 58) is scanning a plurality of areas (28, 30, 32, 34, 36, 38, 40) of a resistive multi-point touch panel (10) sequentially to detect triggered areas (32, 34, 36, 38) of the resistive multi-point touch panel (10).
